(19) Europäisches Patentamt
European Patent Office
Office européen des brevets

(11) **EP 3 091 427 A1**

(12) **EUROPEAN PATENT APPLICATION**

(43) Date of publication:
**09.11.2016 Bulletin 2016/45**

(51) Int Cl.:
*G06F 3/0484* (2013.01)    *G06T 11/60* (2006.01)
*G06F 3/0488* (2013.01)

(21) Application number: **15305696.5**

(22) Date of filing: **06.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Verdier, Alain
  35576 Cesson-Sévigné (FR)**
• **Cazettes, Christophe
  35576 Cesson-Sévigné (FR)**
• **Gandon, Cyrille
  35576 Cesson-Sévigné (FR)**

(74) Representative: **Huchet, Anne
TECHNICOLOR
1-5, rue Jeanne d'Arc
92130 Issy-les-Moulineaux (FR)**

Remarks:
A request for correction of the description referring to the numbering of the drawings has been filed pursuant to Rule 139 EPC. A decision on the request will be taken during the proceedings before the Examining Division (Guidelines for Examination in the EPO, A-V, 3.).

(54) **APPARATUS AND METHOD FOR SELECTING AN IMAGE AREA**

(57)     A method for selecting a partial area of an image on a screen (140), in particular a touchscreen. A processor (110) of an apparatus (100) receives (612, 622) and stores the coordinates of a first touch applied to the touchscreen (140) as well as multiple coordinates along a trace made by the user, and is notified of the release of the touchscreen (140). The processor analyzes (633) the stored coordinates to obtain the position and the dimensions of the selection area and displays (634) a geometrical shape corresponding to the selection area on the screen. Different analysis methods are described. The shapes are preferably simple geometric shapes such as a rectangle. Also provided is the apparatus (100). The invention can allow simple and fast selection of a partial area in an image.

Figure 4

EP 3 091 427 A1

## Description

TECHNICAL FIELD

The present disclosure relates generally to mobile devices equipped with a touch screen and in particular to the selection of a partial area of an image displayed on such a device.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Selection of a partial area of an image displayed on a screen is ubiquitous in today's computer systems, for example in image editing tools such as Adobe Photoshop, Gimp, or Microsoft Paint. The prior art comprises a number of different solutions that allow the selection of a partial area of an image.

One very common solution is a rectangular selection based on clicking on a first point that will be the first corner of the rectangle and while keeping the finder pressed on the mouse moving the pointer to a second point that will be the second corner of the rectangle. During the pointer move the selection rectangle is drawn on the screen to allow the user to visualize the selected area of the image. Please note that in alternative to the rectangular shape, the selection can use any geometrical shape such as a square, a circle, an oval or more complex forms. A major drawback of this method is the lack of precision on the first corner. The best example illustrating that issue would be selecting a circular object such as a ball with the rectangular shape. No reference can help the user in knowing where to start from. To solve this issue, some implementations propose to keep so-called handles on the rectangle, allowing to resize it and to adjust it with more precision by clicking on these handles and moving them to a new location. However this requires multiple interactions from the user to adjust the selection area.

Other techniques provide non-geometrical forms of selection, closer to the image content and sometimes using contour detection algorithm to follow objects pictured in the image. In such solutions, generally the user tries to follow the contour of the area he wants to select. This forms a trace that delimits the selection area. However, the drawback of this solution is that the user must close the trace by coming back to the first point to indicate that his selection is done, which is sometimes difficult.

Some of these techniques have been adapted to the particularity of touch screen equipped devices such as smartphones and tablets. Indeed, in such devices, the user interacts directly with his finger on the image displayed on the screen. CN101458586 proposes to combine multiple finger touches to adjust the selection area with the drawback of relatively complex usability and additional learning phase for the user. US20130234964 solves the problem of masking the image with the finger by introducing a shift between the area to be selected and the point where the user presses the screen. This technique has the same drawbacks as the previous solution: the usability is poor and adds some learning complexity.

It can therefore be appreciated that there is a need for a solution that allows the user to select a selection area on an image displayed on the touch screen and that addresses at least some of the problems of the prior art. The present disclosure provides such a solution.

SUMMARY

In a first aspect, the disclosure is directed to a data processing apparatus for selecting a partial area of the image, comprising: a screen configured to obtain a set of coordinates of a trace made on a screen; a processor configured to receive the set of coordinates of the trace made on the screen; and compute, using at least three coordinates of the set of coordinates, a position and dimensions of a selection area having a predefined geometric shape; and display the selection area on the screen.

A first embodiment comprises computing the position and the dimensions of the selection area by averaging the received coordinates to define the center of the selection area and averaging the deviations from the received coordinates towards the center to define the dimensions of the selection area.

A variant embodiment comprises computing the position and the dimensions of the selection area by obtaining the minimal values of the stored coordinates, independently for the horizontal and vertical axis, to define a first corner of the selection area and by obtaining the maximal values of the stored coordinates, independently for the horizontal and vertical axis, to define a second corner of the selection area.

A variant embodiment comprises computing the position and the dimensions of the selection area by averaging the received coordinates to define the center of a first rectangle and averaging the deviations from the received coordinates towards the center to define the dimensions of the first rectangle; obtaining the minimal values of the stored coordinates, independently for the horizontal and vertical axis, to define a first corner of a second rectangle and obtaining the maximal values of the stored coordinates, independently for the horizontal and vertical axis, to define a second corner of the second rectangle; and averaging the position and the dimensions of the first and second rectangles with a chosen weighting on the respective positions and the dimension values to define the position and the dimensions of the selection area.

A variant embodiment comprises computing an orientation of the selection area by calculating the orientation of first and second rectangles by performing a linear regression on the received coordinates and averaging the orientation of first and second rectangle with a chosen weighting on the respective values to define the orientation of the selection area.

The selection area of any embodiment of the first aspect can be a rectangle or an ellipse.

In a second aspect, the disclosure is directed to a method for selecting a partial area of an image, comprising at a processor of an apparatus, obtaining a set of coordinates of a trace made on a screen; computing, using at least three coordinates of the set of coordinates, a position and a size for dimensions of a selection area having a predefined geometric shape; and displaying the selection area on the screen.

A first embodiment comprises a method where the position and the dimensions of the selection area are computed by averaging the received coordinates to define the center of the selection area and averaging the deviations from the received coordinates towards the center to define the dimensions of the selection area.

A variant embodiment comprises a method where the position and the dimensions of a the selection area are computed by obtaining the minimal values of the stored coordinates, independently for the horizontal and vertical axis, to define a first corner of the selection area and by obtaining the maximal values of the stored coordinates, independently for the horizontal and vertical axis, to define a second corner of the selection area.

A variant embodiment comprises a method where the position and the dimensions of a the selection area are computed by averaging the received coordinates to define the center of a first rectangle and averaging the deviations from the received coordinates towards the center to define the size dimensions of the first rectangle; calculating obtaining the minimal values of the stored coordinates, independently for the horizontal and vertical axis, to define a first corner of a second rectangle and calculating obtaining the maximal values of the stored coordinates, independently for the horizontal and vertical axis, to define a second corner of the second rectangle; and averaging the position and size dimensions of the first and second rectangles with a chosen weighting on the respective position and dimension values to define the position and the dimensions of the selection area.

A variant embodiment comprises a method where the orientation of the selection area is computed by calculating the orientation of first and second rectangles are computed by performing a linear regression on the received coordinates; and averaging the orientation of first and second rectangle are averaged with a chosen weighting on the respective values to define the orientation of the selection area.

The selection area of any embodiment of the second aspect can be a rectangle or an ellipse.

In a third aspect, the disclosure is directed to a computer program comprising program code instructions executable by a processor for implementing any embodiment of the method of the second aspect.

In a fourth aspect, the disclosure is directed to a computer program product which is stored on a non-transitory computer readable medium and comprises program code instructions executable by a processor for implementing any embodiment of the method of the second aspect.

## BRIEF DESCRIPTION OF DRAWINGS

Preferred features of the present disclosure will now be described, by way of nonlimiting example, with reference to the accompanying drawings, in which

Figure 1 illustrates an exemplary system in which the disclosure may be implemented;
Figures 2 illustrates a screenshot of the touchscreen when the user touches the screen to start defining the partial selection area;
Figures 3 illustrates a screenshot of the touchscreen when the user moves his finger to define the partial selection area;
Figures 4 illustrates a screenshot of the touchscreen when the user releases his finger to define the partial selection area;
Figures 5A, 5B, 5C, 5D illustrate different examples of traces showing the variety of movement the user may perform to select the image area;
Figure 6 provides a sequence diagram detailing the interactions;
Figure 7A shows the sampling of the trace on a simplified grid;
Figure 7B provides the sample values for the trace of Figure 7A;
Figures 7C and 7D illustrate the selection area for the trace of Figure 5A using respectively the boundary method and the average method;
Figures 8C and 8D illustrate the selection area for the trace of Figure 5B using respectively the boundary method and the average method;
Figures 9C and 9D illustrate the selection area for the trace of Figure 5C using respectively the boundary method and the average method;
Figures 10C and 10D illustrate the selection area for the trace of Figure 5D using respectively the boundary method and the average method;

## DESCRIPTION OF EMBODIMENTS

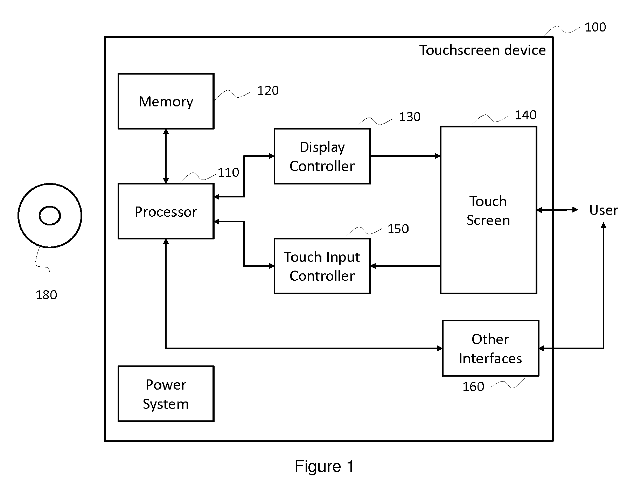

Figure 1 illustrates an exemplary apparatus in which the disclosure may be implemented. The touchscreen device 100 preferably comprises at least one hardware processor 110 configured to execute the method of at least one embodiment of the present disclosure, memory 120, a display controller 130 to generate images to be displayed on the touch screen 140 for the user, and a touch input controller 150 that reads the interactions of the user with the touch screen 140. The touchscreen device 100 also preferably comprises other interfaces 160 for interacting with the user and with other devices and a power system 170. The computer readable storage medium 180 stores computer readable program code that is executable by the processor 110. The skilled person will appreciate that the illustrated device is very simplified for reasons of clarity.

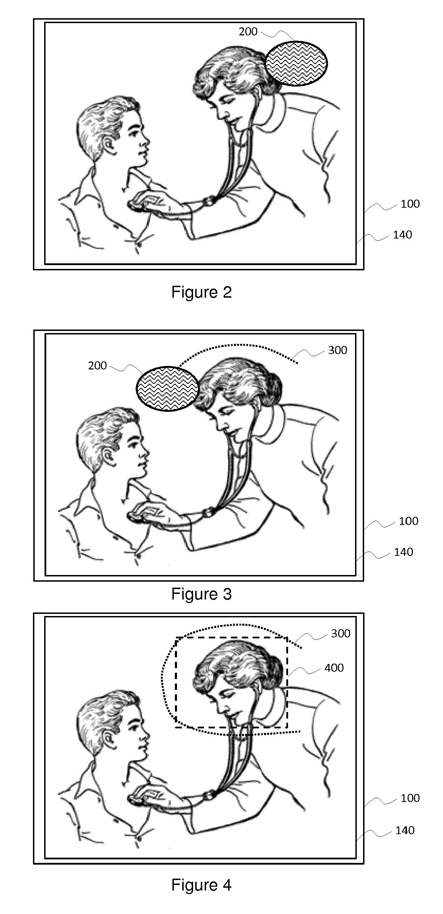

Figures 2, 3 and 4 illustrate an example of the interactions between the user and the touchscreen device 100 where the user aims at selecting the woman's head in the picture displayed on the touchscreen 140. In Figure 2, the user's finger is represented by the oval 200. The user touches the screen on a first touch point at the right of the woman's head. Then he starts to move the finger around the woman's head. The effect of such movement is shown in Figure 3 where the finger has moved to the left of the woman's head. The trajectory of the finger forms a so-called trace 300 that is displayed on the screen and represented in Figure 3 by a dotted line. The user continues the movement until reaching the lower right side of the woman's head. Then he releases the finger from the surface of the touchscreen, as depicted in Figure 4. The trace is analysed by the processor 110 and the corresponding selection area 400 is displayed to the user. In this example, the selection area is an unconstrained rectangular shape but any other geometrical shape could be used, such as a circle, an ellipse, a rectangle with constrained ratio, etc. This selection area can be used by the touchscreen device 100 for different purposes. A particular use of selecting a partial area of an image is related to object selection for tracking an object, for example in a video. This can be used when the user wants to zoom in during playback of a high resolution video streams on small screens. In this case the user selects the area of interest from the picture displayed so that the processor can track this area within the video stream. Another typical use is related to image edition such as copying the area, blurring the area, modifying the colours of the area.

The trace is a list of coordinates of the points touched by the user. Generally, touchscreens handle user interaction by scanning the sensor grid at fixed time intervals (for example every 10 ms) to detect whether a touch is applied and at which horizontal and vertical coordinate. In our application, coordinates are stored when a first touch has been detected, and then the new position at each new scanning is stored until no more touch is detected. This succession of coordinates defines the trace.

The choice of the geometric selection shape to be used is either fixed or chosen by the user among a set of available shapes.

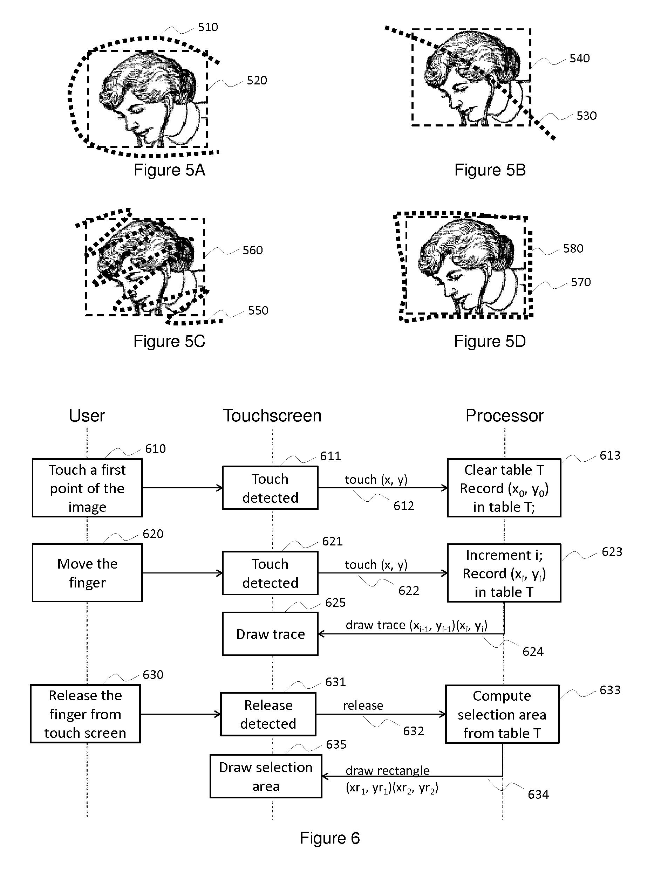

Figures 5A, 5B, 5C, 5D illustrate different examples of traces showing a variety of movements the user may leave to select the image area. In Figure 5A, the user simply surrounds the woman's head without being obliged to close the shape. In Figure 5B, the user draws a simple line while in Figure 5C he scribbles over the area. Finally, in Figure 5D, the user roughly draws a rectangle around the woman's head.

Figure 6 provides a sequence diagram detailing these interactions. The succession of interactions takes place when the user performs a partial selection of an image. This is typically the case in a video player application with live zooming or in image edition tools. The device uses a table T where the succession of touch coordinates defining the trace will be stored. The table is associated with an index i that counts the number of elements present in the table. Both the table T and the index i are preferably stored into the memory 120. When the interaction starts, an image is displayed to the user through the touchscreen 140 and the index i is reset. The user identifies the area of the image to select and touches, in step 610, a first point, for example in proximity of the desired area. The touch is detected, in step 611, by the touchscreen and corresponding coordinates (x, y) are sent, in step 612, to the processor 110. The first coordinates are stored in the table T as the couple $(x_0,y_0)$. When the user moves, in step 620, the finger, this action is detected 621 by the touchscreen and corresponding coordinates (x, y) are sent, in step 612, to the processor 110. The new coordinates are appended, in step 623, to the table as $x_i$ and $y_i$, after having incremented the index i. In order to provide a visual feedback to the user, the trace of his move is shown on the screen for example by drawing a line. For that purpose, the last couple of coordinates are sent back, in step 624, to the touchscreen and the screen is updated, in step 625. As long as the user moves his finger on the touchscreen, the system iterates the steps from 620 to 625. When the user releases, in step 630, his finger from the touchscreen, this action is detected, in step 631, and provided, in step 632, to the processor. This event triggers the analysis of the table T. The values of table T are processed, in step 633, to obtain the selection area, for example as the two corners of a rectangle $(xr_1, yr_1)$, $(xr_2, yr_2)$. These values are then provided, in step 634, to the touchscreen that preferably updates the display to show, in step 635, the selection area to the user. After this step, the selected area may be used accordingly, for example for zooming in a video stream, or for image editing purposes.

Advantageously, the table T is based on a First-In-First-Out principle so that it stores only the N last coordinates. This allows a more precise selection since the first elements might be discarded when the user iterates on the trace. Typical example is a selection drawn in spiral, where the first coordinates are less meaningful than the last ones. In this case, forgetting the first ones will increase the accuracy of the selection.

The computation, in step 633, of the selection area from the table T can be performed using different algorithms, as illustrated in the remaining figures.

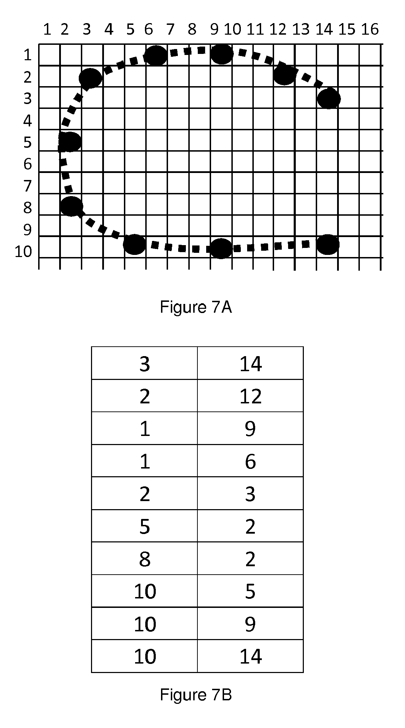

In the following explanations a very simplified implementation will be used where the trace recording is performed on a 10 x 16 grid with only 10 samples. The trace example shown in Figure 7A is recorded in table T as illustrated in Figure 7B where each line corresponds to a sample, the left column to the horizontal position ($x_i$) and the right column to the vertical position ($y_i$).

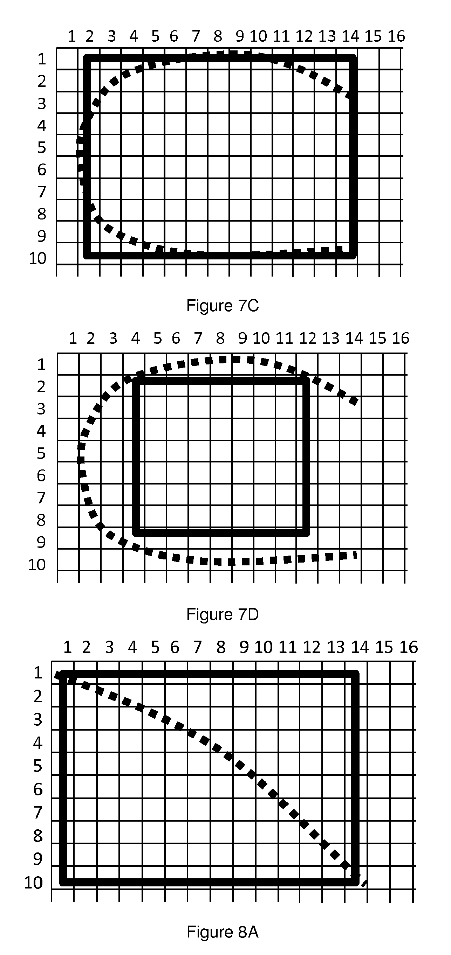

A straightforward implementation of computation, in step 633, would simply take the minimal and maximal values to define a rectangular selection. This method is hereafter called the boundary method. The result of such algorithm is depicted in Figure 7C where the black rectangle represents the partial image selection.

In a preferred embodiment, a different approach is implemented, based on averaging the values on each axis. This method is hereafter called the average method. For that, the average value of each axis is computed from the table T and this is used to defined the center of the rectangle. In the previous example, the center has for coordinates $x_c$ = 5.2 and $y_c$ = 7.6. Then the average distance to the center is calculated. The horizontal average distance is $x_d$ = 3.4 and the vertical is $y_d$ = 4.0. These values define the partial selection rectangle depicted in Figure 7D with the following coordinates:

$$x_{min} = x_c - x_d = 1.8;$$

$$y_{min} = y_c - y_d = 3.6;$$

$$x_{max} = x_c + x_d = 8.6;$$

$$y_{max} = y_c + y_d = 11.6$$

In an alternative embodiment, the partial selection shape is an ellipse shape whose major and minor axis lengths are computed using the average method.

The man skilled in the art will understand that many other computations can be performed to define the rectangular selection area based on the samples of table T. For example, it is possible mix the results from the boundary and the average methods with a weighting factor. Taking the width of a rectangular selection as an example, this could give:

$$W_s = a \times W_a; + b \times W_b;$$

where $W_s$ is the width of the selection rectangle, a the weighting of the average method, $W_a$, the width of the rectangle computed according the average method, b the weighting for the boundary method and $W_b$ the width of the rectangle computed according the boundary method.

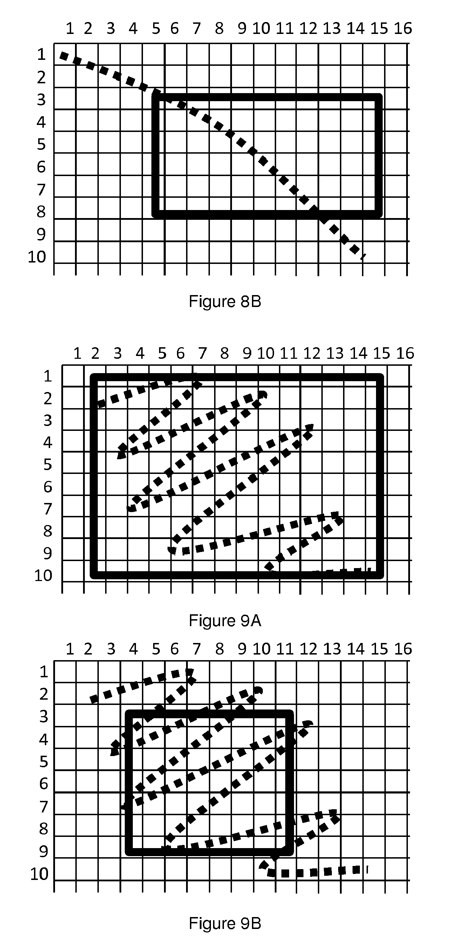

The Figure 8A shows the selection rectangle according to the boundary method on the trace previously seen in Figure 5B whereas Figure 8B illustrates the average method on the same trace.

The Figure 9A shows the selection rectangle according to the boundary method on the trace previously seen in Figure 5C whereas Figure 9B illustrates the average method on the same trace.

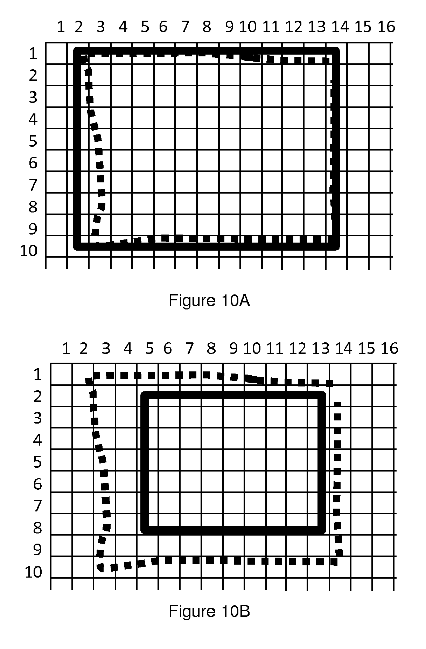

The Figure 10A shows the selection rectangle according to the boundary method on the trace previously seen in Figure 5D whereas Figure 10B illustrates the average method on the same trace.

In another embodiment, the orientation of the geometric shape is variable and is computed from the trace recorded in table T, for example, by a linear regression to define the major axis of an ellipse-shaped selection area. Another example would use the least squares approach to determine a line that will correspond to the longest median of a rectangular selection area.

The image used in the Figures is in the public domain through Wikimedia Commons.

As will be appreciated by one skilled in the art, aspects of the present principles can take the form of an entirely hardware embodiment, an entirely software embodiment (including firmware, resident software, microcode and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized. Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A data processing apparatus (100) for selecting a partial area of the image, comprising:

   - a screen (140) configured to:

     - obtain a set of coordinates of a trace made on a screen (140);

   - a processor (110) configured to:

     - receive the set of coordinates of the trace made on the screen (140); and
     - compute, using at least three coordinates of the set of coordinates, a position and dimensions of a selection area having a predefined geometric shape; and
     - display the selection area on the screen (140).

2. The device of claim 1 wherein the processor (110) is configured to compute the position and the dimensions of the selection area by averaging the received coordinates to define the center of the selection area and averaging the deviations from the received coordinates towards the center to define the dimensions of the selection area.

3. The device of claim 1 wherein the processor (110) is configured to compute the position and the dimensions of the selection area by obtaining the minimal values of the stored coordinates, independently for the horizontal and vertical axis, to define a first corner of the selection area and by obtaining the maximal values of the stored coordinates, independently for the horizontal and vertical axis, to define a second corner of the selection area.

4. The device of claim 1 wherein the processor (110) is configured to compute the position and the dimensions of the selection area by:

   - averaging the received coordinates to define the center of a first rectangle and averaging the deviations from the received coordinates towards the center to define the dimensions of the first rectangle;
   - obtaining the minimal values of the stored coordinates, independently for the horizontal and vertical axis, to define a first corner of a second rectangle and obtaining the maximal values of the stored coordinates, independently for the horizontal and vertical axis, to define a second corner of the second rectangle; and
   - averaging the position and the dimensions of the first and second rectangles with a chosen weighting on the respective positions and the dimension values to define the position and the dimensions of the selection area.

5. The device of claim 4 wherein the processor (110) is configured to compute an orientation of the selection area by:

   - calculating the orientation of first and second rectangles by performing a linear regression on the received coordinates; and
   - averaging the orientation of first and second rectangle with a chosen weighting on the respective values to define the orientation of the selection area.

6. The device of any one of claims 2-5 wherein the selection area is a rectangle.

7. The device of any one of claims 2-5 wherein the selection area is an ellipse.

8. A method for selecting a partial area of an image, comprising at a processor (110) of an apparatus (100):

   - obtaining (612, 622) a set of coordinates of a trace made on a screen (140);
   - computing (633), using at least three coordinates of the set of coordinates, a position and a size for dimensions of a selection area having a predefined geometric shape; and
   - displaying (634) the selection area on the screen (140).

9. A method according to claim 8 where the position and the dimensions of the selection area are computed (633) by averaging the received coordinates to define the center of the selection area and averaging the deviations from the received coordinates towards the center to define the dimensions of the selection area.

**10.** A method according to claim 8 where the position and the dimensions of the selection area are computed (633) by obtaining the minimal values of the stored coordinates, independently for the horizontal and vertical axis, to define a first corner of the selection area and by obtaining the maximal values of the stored coordinates, independently for the horizontal and vertical axis, to define a second corner of the selection area.

**11.** A method according to claim 8 where the position and the dimensions of the selection area are computed (633) by:

- averaging the received coordinates to define the center of a first rectangle and averaging the deviations from the received coordinates towards the center to define the size dimensions of the first rectangle;
- calculating obtaining the minimal values of the stored coordinates, independently for the horizontal and vertical axis, to define a first corner of a second rectangle and calculating obtaining the maximal values of the stored coordinates, independently for the horizontal and vertical axis, to define a second corner of the second rectangle; and
- averaging the position and size dimensions of the first and second rectangles with a chosen weighting on the respective position and dimension values to define the position and the dimensions of the selection area.

**12.** A method according to claim 11 where the orientation of the selection area is computed (633) by:

- calculating the orientation of first and second rectangles are computed by performing a linear regression on the received coordinates; and
- averaging the orientation of first and second rectangle are averaged with a chosen weighting on the respective values to define the orientation of the selection area.

**13.** A method according any one of claims 8-12 wherein the selection area is a rectangle.

**14.** Computer program comprising program code instructions executable by a processor (110) for implementing the steps of a method according to at least one of claims 9 to 13.

**15.** Computer program product which is stored on a non-transitory computer readable medium (180) and comprises program code instructions executable by a processor (110) for implementing the steps of a method according to at least one of claims 9 to 13.

Figure 1

Figure 2

Figure 3

Figure 4

510

520

Figure 5A

540

530

Figure 5B

560

550

Figure 5C

580

570

Figure 5D

| User | Touchscreen | Processor |
|------|-------------|-----------|

610

Touch a first point of the image

611

Touch detected

touch (x, y)

612

613

Clear table T
Record $(x_0, y_0)$
in table T;

620

Move the finger

621

Touch detected

touch (x, y)

622

623

Increment i;
Record $(x_i, y_i)$
in table T

625

Draw trace

draw trace $(x_{i-1}, y_{i-1})(x_i, y_i)$

624

630

Release the finger from touch screen

631

Release detected

release

632

633

Compute selection area from table T

635

Draw selection area

draw rectangle $(xr_1, yr_1)(xr_2, yr_2)$

634

Figure 6

Figure 7A

| 3 | 14 |
|---|----|
| 2 | 12 |
| 1 | 9 |
| 1 | 6 |
| 2 | 3 |
| 5 | 2 |
| 8 | 2 |
| 10 | 5 |
| 10 | 9 |
| 10 | 14 |

Figure 7B

Figure 7C

Figure 7D

Figure 8A

Figure 8B

Figure 9A

Figure 9B

Figure 10A

Figure 10B

Europäisches
Patentamt

European
Patent Office

Office européen
des brevets

## EUROPEAN SEARCH REPORT

Application Number

EP 15 30 5696

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CN 101 458 586 A (ELAN MICROELECTRONICS CORP [CN]) 17 June 2009 (2009-06-17) * abstract * * paragraph [0026] - paragraph [0032]; figure 2B * | 1-15 | INV. G06F3/0484 G06T11/60 G06F3/0488 |
| A,D | US 2013/234964 A1 (KIM DO-HYEON [KR] ET AL) 12 September 2013 (2013-09-12) * abstract * * paragraph [0055] - paragraph [0062]; figure 2 * * paragraph [0081] - paragraph [0086]; figure 5 * | 1-15 | |
| X | US 5 471 548 A (BRAZAS JOHN C [US]) 28 November 1995 (1995-11-28) * abstract * * column 2, line 45 - line 54 * * column 5, line 1 - line 8; figure 1 * * sentence 47 - sentence 52; figure 2 * * column 5, line 53 - column 6, line 39; figures 3a,3b,4a,4b,5a,5b,6 * * column 8, line 21 - column 9, line 34; figure 16 * | 1-15 | |
| A | US 2012/249595 A1 (FEINSTEIN DAVID Y [US]) 4 October 2012 (2012-10-04) * abstract * | 1,8,14, 15 | |
| A | US 2013/120434 A1 (KIM NAYOUNG [US]) 16 May 2013 (2013-05-16) * abstract * * paragraphs [0006], [0030] * * paragraph [0042]; figure 1B * * paragraphs [0071], [0073], [0076]; figures 8B, 9A, 10A * | 1,8,14, 15 | |

TECHNICAL FIELDS
SEARCHED      (IPC)

G06F
G06T

-/--

The present search report has been drawn up for all claims

| Place of search | Date of completion of the search | Examiner |
|---|---|---|
| Munich | 20 August 2015 | Valin, Steven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 15 30 5696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/022394 A1 (BANERJEE SHYMMON [CA] ET AL) 22 January 2009 (2009-01-22)<br>* abstract *<br>* paragraph [0073] - paragraph [0079]; figure 14 *<br>* paragraph [0081]; figures 15a, 15b *<br>* paragraph [0082]; figures 16a, 16b *<br>* paragraph [0083] - paragraph [0088] *<br>----- | 1-15 | |
| X | Diane Koers: "Picture Yourself Learning Corel Paint Shop Pro Photo X2",<br>1 February 2008 (2008-02-01), Course Technology PTR, Boston, MA, XP002743508,<br>ISBN: 1-59863-671-5<br>pages 56-57,<br>* the whole document *<br>----- | 1-15 | |
| A | US 2012/283998 A1 (LETZELTER FREDERIC [FR]) 8 November 2012 (2012-11-08)<br>* the whole document *<br>----- | 2-5,9-12 | |

**TECHNICAL FIELDS SEARCHED (IPC)**

The present search report has been drawn up for all claims

| Place of search | Date of completion of the search | Examiner |
|---|---|---|
| Munich | 20 August 2015 | Valin, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                               

& : member of the same patent family, corresponding document

EPO FORM 1503 03.82 (P04C01)

## EP 3 091 427 A1

### ANNEX TO THE EUROPEAN SEARCH REPORT
### ON EUROPEAN PATENT APPLICATION NO.

EP 15 30 5696

20-08-2015

| Patent document cited in search report | | Publication date | Patent family member(s) | | Publication date |
|---|---|---|---|---|---|
| CN 101458586 | A | 17-06-2009 | NONE | | |
| US 2013234964 | A1 | 12-09-2013 | KR 20130102795 A | | 23-09-2013 |
| | | | US 2013234964 A1 | | 12-09-2013 |
| US 5471548 | A | 28-11-1995 | NONE | | |
| US 2012249595 | A1 | 04-10-2012 | US 2012249595 A1 | | 04-10-2012 |
| | | | WO 2012135478 A2 | | 04-10-2012 |
| US 2013120434 | A1 | 16-05-2013 | NONE | | |
| US 2009022394 | A1 | 22-01-2009 | AU 2008278242 A1 | | 22-01-2009 |
| | | | CA 2693775 A1 | | 22-01-2009 |
| | | | CN 101765860 A | | 30-06-2010 |
| | | | EP 2168095 A1 | | 31-03-2010 |
| | | | KR 20100051648 A | | 17-05-2010 |
| | | | NZ 582553 A | | 25-01-2013 |
| | | | US 2009022394 A1 | | 22-01-2009 |
| | | | WO 2009009896 A1 | | 22-01-2009 |
| US 2012283998 | A1 | 08-11-2012 | EP 2521056 A1 | | 07-11-2012 |
| | | | US 2012283998 A1 | | 08-11-2012 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101458586
- US 20130234964 A